# EUROPEAN PATENT APPLICATION

(11) **EP 2 875 870 A1**
(43) Date of publication of application: **27.05.2015**
(21) Application number: 13819753.8
(22) Date of filing: 17.07.2013
(51) Int. Cl.: B05B 5/057

(54) **ELECTROSTATIC SPRAYING DEVICE**

(30) Priority: 18.07.2012 JP 2012159828
(71) Applicant: Sumitomo Chemical Company Limited, Tokyo 104-8260 (JP)
(72) Inventor: SASAKI, Takashi, Takarazuka-shi Hyogo 665-8555 (JP)
(74) Representative: Vossius & Partner Patentanwälte Rechtsanwälte mbB
(86) International application number: PCT/JP2013/069383
(87) International publication number: WO 2014/014014

(57) **Abstract**

An electrostatic spray device (100) equipped with a spray electrode (1) and a reference electrode (2) includes: a groove (8) formed on a surface of the device for collecting a substance adhered to the surface of the device; and a substance recovery section (9) for recovering the collected substance into the device from the groove (8), wherein the substance recovery section (9) is provided in the form of a trapezoidal opening, and the shorter of the parallel sides of the trapezoidal opening is located below in the direction of gravity in a state where the device is made to stand.

## Description

### TECHNICAL FIELD

The present invention relates to an electrostatic spray device which can reduce effects caused by adhesion of a liquid.

### BACKGROUND ART

Conventionally, a spray device for spraying a liquid in a container from a nozzle has been used in various fields. As this type of spray device, there has been known an electrostatic spray device which sprays a liquid after atomizing the liquid by making use of Electro Hydrodynamics (EHD). This electrostatic spray device forms an electric field in the vicinity of a tip of a nozzle, and atomizes a liquid existing at the tip of the nozzle by making use of the electric field, and sprays the atomized liquid. As document which discloses such an electrostatic spray device, there has been known Patent Document 1.

### PRIOR ART DOCUMENT

### PATENT DOCUMENT

Patent Document 1: US-A-2007/0194156

### SUMMARY OF THE INVENTION

### PROBLEMS TO BE SOLVED BY THE INVENTION

However, the prior art has the following problems.

In general, in an electrostatic spray device, an electric field is generated between two electrodes (a pin and a capillary) by applying a voltage across both electrodes. In this state, the electric field is directed in the direction of the pin and hence, with respect to a sprayed substance, there is a possibility that a spray back where the substance is sprayed in the direction of the pin, that is, in the direction toward the device or the like occurs, so that a liquid adheres to the electrostatic spray device. When a surface of the device is in a wet state, a hand of a user becomes wet when the user grips the device. The electrostatic spray device may be used for spraying essential oils, chemical substances for agricultural products, pharmaceuticals, agricultural chemicals, insecticides, air purifying agents or the like and hence, it is desirable that the adhesion of a liquid to a surface of the device is as small as possible.

In this respect, Patent Document 1 discloses an electrostatic spray device provided with the collecting structure for collecting a liquid staying on a surface of the device. However, the collecting structure disclosed in Patent Document 1 is formed of a groove for collecting a liquid into a prescribed region (reference symbol 7 in Fig. 1 of Patent Document 1), and the collected liquid remains on the surface of the device although the liquid is collected into the prescribed region. Accordingly, when the liquid has high viscosity or has low volatility, an evaporation amount is small, so that an amount of remaining liquid is increased whereby there is a possibility that the liquid overflows from the groove. Further, when the electrostatic spray device is tilted, the collected liquid flows in the direction that the electrostatic spray device is tilted. Also in this case, the collected liquid may overflow from the groove.

The present invention has been made to overcome the above-mentioned problems, and it is an object of the present invention to provide an electrostatic spray device which can reduce effects caused by adhesion of a liquid.

### MEANS FOR SOLVING THE PROBLEMS

To overcome the above-mentioned problems, the electrostatic spray device according to the present invention is an electrostatic spray device equipped with a first electrode for spraying a substance from the tip thereof and a second electrode across which and the first electrode voltage is applied, wherein the electrostatic spray device includes: a groove formed on a surface of the device for collecting the substance adhered to the surface; and a substance recovery section formed in the groove for recovering the collected substance into the device from the groove. The substance recovery section is provided in the form of a trapezoidal opening, and when the device is made to stand, the shorter of the parallel sides of the trapezoid is located below in the direction of gravity.

Due to such a constitution, even when the substance sprayed from the first electrode adheres to the surface of the device due to a spray back or the like, for example, the substance is collected into the groove for collecting the substance. Further, the substance recovery section is formed in the groove and the substance recovery section recovers the substance collected into the groove to the inside of the device from the groove.

At this stage of operation, the substance recovery section is provided in the form of a trapezoidal shape, and the shorter of the parallel sides of the trapezoidal is located below in the direction of gravity (hereinafter, such a shape also being referred to as an inverse trapezoidal shape). Hereinafter, for the sake of convenience, with respect to the parallel sides of the trapezoidal shape, the longer side is referred to as an upper parallel side, and the shorter side is referred to as a lower parallel side. Due to such a constitution, in the electrostatic spray device according to the present invention, the lower parallel side having a narrow width is located below the upper parallel side having a wide width in the direction of gravity and hence, the substance smoothly moves toward a lower-parallel-side side from an upper-parallel-side side, and is efficiently recovered in the inside of the device.

Assume the case where the substance recovery section is provided in the form of a triangular shape, and one of vertexes is directed in the direction of gravity (hereinafter, such a shape also being referred to as "inverse triangular shape"). In this case, there is a possibility that the substance which moves in the direction of gravity is directed to the vertex, and the substance overflows to the groove from the substance recovery section at the vertex. There is also a possibility that the substance which overflows from the substance recovery section also overflows from the groove.

To the contrary, the electrostatic spray device according to the present invention includes the substance recovery section having an inverse trapezoidal shape and hence, a substance which moves toward the lower parallel side is made to stay in the lower parallel side portion thus decreasing frequency that the substance overflows to the outside of the device from the lower parallel side.

In this manner, the electrostatic spray device according to the present invention includes the above-mentioned substance recovery section and hence, the electrostatic spray device can recover a substance more efficiently whereby effects brought about by the adhesion of a liquid can be reduced.

### EFFECT OF THE INVENTION

As described above, the electrostatic spray device according to the present invention includes: the groove formed on the surface of the device for collecting the substance adhered to the surface; and the substance recovery section formed in the groove for recovering the collected substance into the device from the groove. The substance recovery section is provided in the form of the trapezoidal opening, and when the device is made to stand, the shorter of the parallel sides of the trapezoid is located below in the direction of gravity.

Accordingly, the present invention provides an advantageous effect that an electrostatic spray device which can reduce effects caused by adhesion of a liquid is provided.

### BRIEF DESCRIPTION OF THE DRAWINGS

Fig. 1 is a view showing a surface of a casing of an electrostatic spray device of an embodiment.
Fig. 2 is a view showing the constitution of an essential part of the electrostatic spray device of the embodiment.
Fig. 3 is a view in which results of recovering a liquid using liquid recovery sections having various shapes are described.
Fig. 4 is a view in which results of recovering a liquid using liquid recovery sections having various shapes are described.
Fig. 5 is a view showing a lower portion of the electrostatic spray device in an upright posture, and is also a view showing a state where slits are formed in the liquid recovery section.
Fig. 6(a) and Fig. 6(b) are views showing shape of the slits, wherein Fig. 6 (a) is a view showing a plurality of slits having a triangular shape, and Fig. 6(b) is a view showing a slit having an elliptical shape.
Fig. 7 is a view showing a modification of the lower portion of the electrostatic spray device shown in Fig. 5.

### MODE FOR CARRYING OUT THE INVENTION

Hereinafter, an electrostatic spray device 100 of an embodiment is described by reference to drawings. In the description made hereinafter, the same symbol is given to the identical parts or constitutional elements. Identical parts or constitutional elements also have the same name and the same function. Accordingly, the detailed description of identical parts or constitutional elements is not repeated.

### [Constitution of essential part of electrostatic spray device 100]

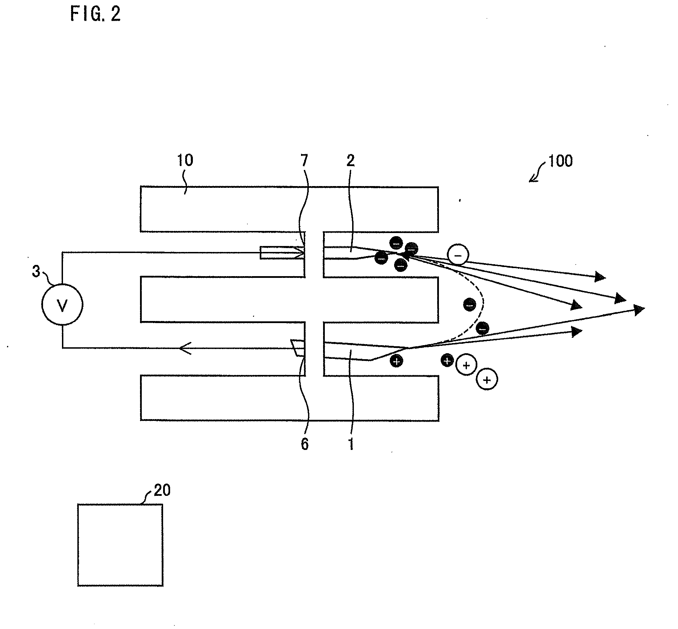

Firstly, the constitution of an essential part of the electrostatic spray device 100 is described by reference to Fig. 2. Fig. 2 is a view for describing the constitution of the essential part of the electrostatic spray device 100.

The electrostatic spray device 100 is a device which is used for spraying essential oils, chemical substances for agricultural products, pharmaceuticals, agricultural chemicals, insecticides, air purifying agents or the like. The electrostatic spray device 100 includes at least: a spray electrode (first electrode) 1; a reference electrode (second electrode) 2; a power source device 3; a dielectric 10; and a storage container 20 for storing a liquid recovered from a liquid recovery section (opening).

The power source device 3 may be disposed outside the electrostatic spray device 100, and the power source device 3 and the electrostatic spray device 100 may be connected to each other.

The spray electrode 1 includes: a conductive conduit such as a metal capillary (made of 304 stainless steel or the like, for example); and a spray portion which constitutes a tip portion of the spray electrode 1. The spray electrode 1 is connected to the reference electrode 2 via the power source device 3, and sprays a substance to be sprayed from the spray portion. In the description made hereinafter, a substance to be sprayed is simply referred to as "liquid".

The reference electrode 2 is formed of a conductive rod such as a metal pin (made of a 304 steel pin or the like, for example). The spray electrode 1 and the reference electrode 2 are arranged parallel to each other in a spaced-apart manner from each other by a prescribed distance. The spray electrode 1 and the reference electrode 2 are arranged in a spaced-apart manner from each other with a distance of 8 mm therebetween, for example.

The power source device 3 applies a high voltage across the spray electrode 1 and the reference electrode 2. For example, the power source device 3 applies a high voltage of 1-30 kV (for example, 3-7 kV) across the spray electrode 1 and the reference electrode 2. When a high voltage is applied across the spray electrode 1 and the reference electrode 2, an electric field is generated between the electrodes, and an electric dipole is generated in the inside of the dielectric 10. In such a state, the spray electrode 1 is positively charged while the reference electrode 2 is negatively charged (it is also possible that the spray electrode 1 is negatively charged while the reference electrode 2 is positively charged). A negative dipole is generated on a portion of a surface of the dielectric 10 disposed closest to the positively charged spray electrode 1, while a positive dipole is generated on a portion of a surface of the dielectric 10 disposed closest to the negatively charged reference electrode 2. Charged gas and charged substance species are discharged by the spray electrode 1 and the reference electrode 2.

The dielectric 10 is made of a dielectric material such as nylon 6, nylon 11, nylon 12, nylon 66, polypropylene or polyacetyl-polytetrafluoroethylene mixture, for example. The dielectric 10 supports the spray electrode 1 at a spray electrode mounting portion 6, and supports the reference electrode 2 at a reference electrode mounting portion 7.

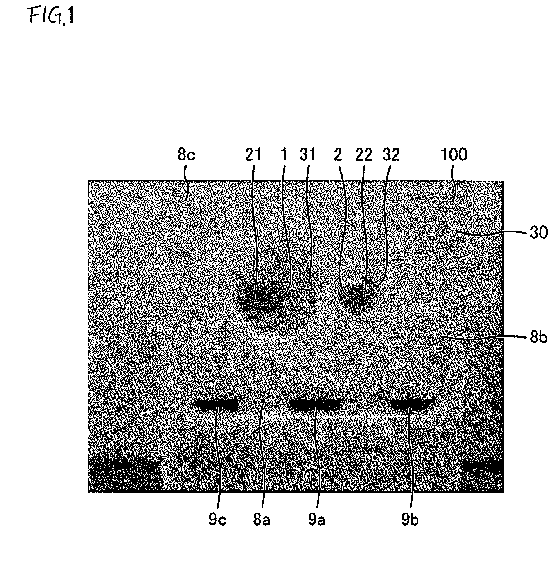

Next, a groove 8 and a liquid recovery section (substance recovery section) 9 formed on the electrostatic spray device 100 are described by reference to Fig. 1. Fig. 1 is a view showing a surface of a casing of the electrostatic spray device 100. The direction directed to a lower side of the drawing is the direction of gravity. Fig. 1 shows the electrostatic spray device 100 in an upright posture.

The electrostatic spray device 100 has an approximately rectangular parallelepiped shape. In a surface 30 of the electrostatic spray device 100 on a side where a liquid is sprayed, a circular annular opening 31 and a circular annular opening 32 are formed, wherein the circular annular opening 31 is formed such that the opening 31 may surround the spray electrode 1, and the circular annular opening 32 is formed such that the opening 32 may surround the reference electrode 2.

A groove 8a, a groove 8b and a groove 8c are formed on the surface 30. The groove 8b and the groove 8c are formed in an extending manner in the longitudinal direction (the vertical direction in the drawing) of the electrostatic spray device 100, and are connected to each other by way of the groove 8a. The groove 8a is formed in an extending manner in the lateral direction (the right-and-left direction in the drawing) of the electrostatic spray device 100, and the groove 8b and the groove 8c are connected to each other by way of the groove 8a. In Fig. 1, the groove 8a intersects with the groove 8b and the groove 8c in the substantially perpendicular direction. The groove 8b and the groove 8c are not indispensable, and only the groove 8a may be formed on the surface.

A liquid recovery section 9a, a liquid recovery section 9b and a liquid recovery section 9c are formed in the groove 8a. The liquid recovery section 9a is located in the center portion of the groove 8a which extends in the horizontal direction, and the liquid recovery section 9b and the liquid recovery section 9c are located in each end of the groove 8a respectively. The liquid recovery section 9a, the liquid recovery section 9b and the liquid recovery section 9c are provided in the form of a trapezoidal shape, and the shorter of the parallel sides of the trapezoidal opening is located below in the direction of gravity (hereinafter such a shape being also referred to as "inverse trapezoidal shape"). The liquid recovery section 9a, the liquid recovery section 9b and the liquid recovery section 9c may be formed with a tilt in the groove 8a, for example, such that a liquid can be easily recovered into the inside of the electrostatic spray device 100.

In this embodiment, the groove 8a having a length of 26 mm and a height of 1 mm, for example, is formed. The liquid recovery section 9a having an upper parallel side of 6 mm, a lower parallel side of 4 mm, and a height 1.6 mm is formed. The liquid recovery section 9b and the liquid recovery section 9c having an upper parallel side of 5 mm, a lower parallel side of 3 mm, and a height of 1.6 mm are formed. These numerical values are described merely as one example, and sizes of these portions are not limited to these numerical values.

As described in the drawing, the spray electrode 1 is connected to an electric conductor 21, and a voltage is applied to the spray electrode 1 from the power source device 3 not shown in the drawing through the electric conductor 21. The reference electrode 2 is connected to an electric conductor 22, and a voltage is applied to the reference electrode 2 by the power source device 3 not shown in the drawing through the electric conductor 22. The electric conductor 21 and/or the electric conductor 22 may be coated with a material having water repellent performance and oil repellent performance. Further, an O-ring made of silicon, fluoro rubber, a resin or the like having chemical resistances may be provided to the spray electrode 1 and/or the reference electrode 2.

The electrostatic spray device 100 has the above-mentioned constitution and hence, the electrostatic spray device 100 can provide the following advantageous effects.

To be more specific, on the surface 30 of the electrostatic spray device 100, the liquid recovery section 9a, the liquid recovery section 9b and the liquid recovery section 9c are formed in the groove 8a. Accordingly, when a liquid flows into the groove 8a, the liquid is smoothly introduced into the liquid recovery section 9a, the liquid recovery section 9b and the liquid recovery section 9c. Even when the electrostatic spray device 100 is tilted right and left, since the liquid recovery section 9b and liquid recovery section 9c are formed in each end of the groove 8a respectively, the liquid can be smoothly introduced into the liquid recovery section 9b and the liquid recovery section 9c.

Accordingly, even when a liquid which is introduced into the groove 8a has high viscosity and/or low volatility, the liquid can be smoothly introduced into the liquid recovery section 9a, the liquid recovery section 9b and the liquid recovery section 9c and is recovered into the inside of the electrostatic spray device 100.

By connecting the liquid recovery section 9a, the liquid recovery section 9b and the liquid recovery section 9c to the storage container 20 not shown in the drawing, a liquid recovered by the liquid recovery section 9a, the liquid recovery section 9b and the liquid recovery section 9c can be stored in the storage container. The stored liquid may be used again. By using the stored liquid again, the electrostatic spray device 100 can suppress a use amount of liquid compared to a conventional electrostatic spray device.

In the case shown in Fig. 1, three units of the liquid recovery section, that is, the liquid recovery section 9a, the liquid recovery section 9b and the liquid recovery section 9c are formed in the groove 8a. However, one or two units of the liquid recovery section may be formed in the groove 8a. Alternatively, four or more units of the liquid recovery section may be formed in the groove 8a. If only one unit of the liquid recovery section is formed, there is a possibility that a liquid is recovered less efficiently when the electrostatic spray device 100 has tilted right and left, as compared with the case of three units of the liquid recovery section being formed. On the other hand, when four or five units of the liquid recovery section are formed in the groove 8a, a size of each liquid recovery section is made small and hence, there is a possibility that absorbing property of the liquid recovery section is lowered with respect to physical property of the liquid. For this reason, it is desirable that the number of units of the liquid recovery section is set to approximately three.

### [Comparison test based on change in shape]

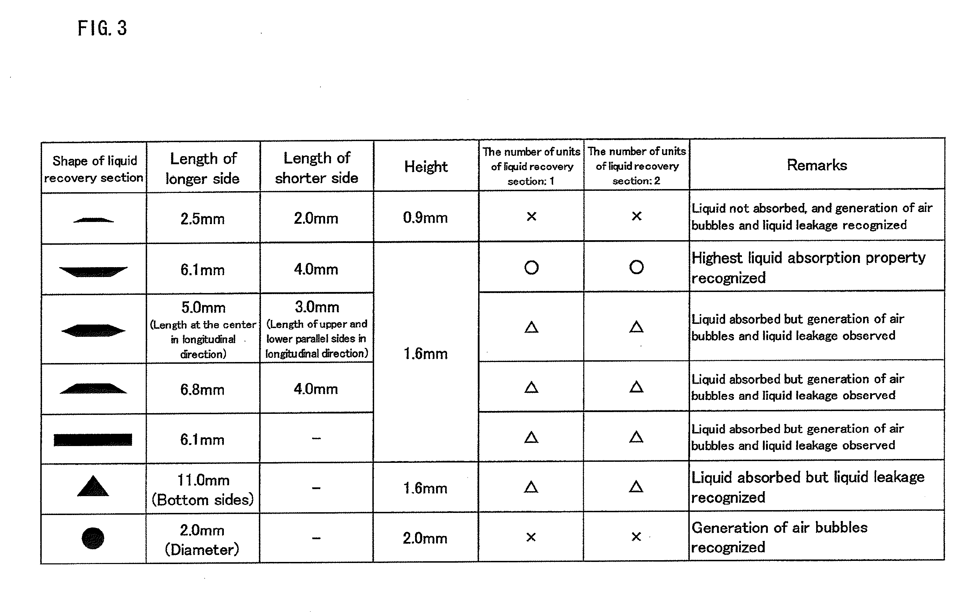

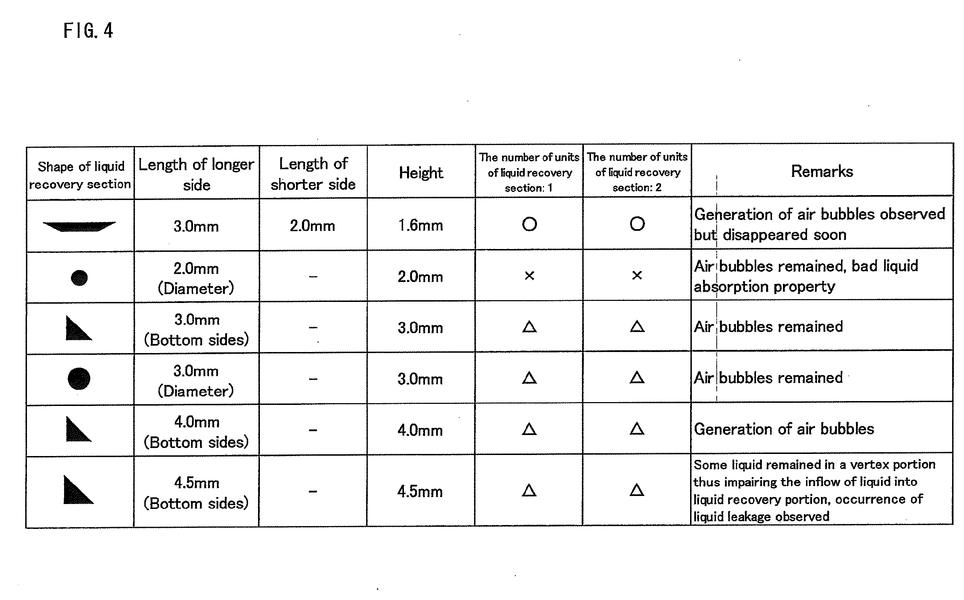

Advantageous effects provided by the electrostatic spray device 100 including a liquid recovery section 9 having an inverse trapezoidal shape on the surface 30 of the electrostatic spray device 100 are described by reference to Fig. 3 and Fig. 4.

Fig. 3 is a view for describing results of recovering a liquid using liquid recovery sections having various shapes. As shown in the drawing, a trapezoidal shape (small), an inverse trapezoidal shape, a rhombic shape, a trapezoidal shape (large), a rectangular shape, a regular triangular shape and a circular shape are used as shapes of the liquid recovery sections for comparison. Sizes (a length of a larger side (in the horizontal direction), a length of a shorter side (in the horizontal direction) and a height) and the like of the respective shapes are as described in Fig. 3. The number of units of each liquid recovery section is one or two. Further, 30 µl of formulation mainly made of DPM is dripped to these liquid recovery sections from above the surface 30 for 10 minutes for every one minute, and liquid absorption property of the formulation into the liquid recovery sections was visually observed. The results of recovering a liquid under such test conditions were evaluated in three grades, that is, "○", "Δ" and "×", and the evaluations were shown in Fig. 3. With respect to such evaluations, "○" indicates that the recovery result is favorable, "Δ" indicates that the recovery result is intermediate, and "×" indicates that the recovery result is bad.

To confirm the results of the evaluation in the order of shapes described in Fig. 3 from the top, when the liquid recovery section had a trapezoidal shape (small), the absorption of liquid was not observed, air bubbles were generated, and leakage of liquid was observed. As the result, the determination "×" was given to the result of recovering a liquid using the liquid recovery section having a trapezoidal shape (small).

Next, when the liquid recovery section had an inverse trapezoidal shape, the liquid recovery section exhibited the highest liquid absorption property. Accordingly, the determination "○" was given to the result of recovering a liquid using the liquid recovery section having an inverse trapezoidal shape.

When the liquid recovery section had a rhombic shape, although the liquid recovery section absorbed a liquid, air bubbles were generated, and leakage of liquid was observed. As the result, the determination "Δ" was given to the result of recovering a liquid using the liquid recovery section having a rhombic shape. The substantially same result was obtained with respect to the other comparison cases, that is, the case where the liquid recovery section had a trapezoidal shape (large), the case where the liquid recovery section had a rectangular shape, and the case where the liquid recovery section had a regular triangular shape.

When the liquid recovery section had a circular shape, air bubbles were generated, and leakage of liquid was observed. As the result, the determination "×" was given to the result of recovering a liquid using the liquid recovery section having a circular shape.

In view of the above, it is found that when the liquid recovery section has an inverse trapezoidal shape, the liquid recovery section exhibits the highest liquid absorption property, so that the liquid recovery section provides the highest liquid leakage preventing effect. It is considered that the reason that the liquid recovery section having an inverse trapezoidal shape can provide the highest liquid leakage preventing effect is as follows.

To be more specific, to consider the case where a large amount of liquid is brought into contact with a liquid recovery section, there may be a case where air bubbles are generated. The air bubbles become a factor which impairs smooth recovery of a liquid, so it is preferable that air bubbles disappear as early as possible. When the liquid recovery section has an inverse trapezoidal shape, a liquid is easily collected to a lower-parallel-side side having a narrow width from an upper-parallel-side side having a wide width, and it is considered that the dissipation of air bubbles is accelerated in the process that the liquid is collected to the lower-parallel-side side. On the other hand, when the liquid recovery section has an inverse triangular shape, for example, an excessively large amount of liquid is collected in the direction of gravity and overflows from the groove 8a. Accordingly, it is found that while the liquid recovery section having an inverse trapezoidal shape makes use of a property of liquid that the liquid is easily collected on a lower-parallel-side side having a narrow width from an upper-parallel-side side having a wide width in the same manner as the liquid recovery section having an inverse triangular shape, the liquid recovery section having an inverse trapezoidal shape and having a lower parallel side can more efficiently recover a liquid to the inside of the electrostatic spray device 100 than the liquid recovery section having an inverse triangular shape which does not have a lower parallel side.

Fig. 4 is a view for describing results of recovering a liquid using liquid recovery sections having various shapes. Particularly, the respective shapes shown in Fig. 4 are shapes prepared by considering the case where the liquid recovery sections having such shapes are used as the liquid recovery section 9b and the liquid recovery section 9c located in each end of the groove 8a.

As shown in the drawing, a trapezoidal shape, a circular shape (small), a triangular shape (small), a circular shape (large), a triangular shape (intermediate) and a triangular shape (large) are used as shapes of the liquid recovery sections for comparison. Sizes (a length of a larger side (in the horizontal direction), a length of a shorter side (in the horizontal direction) and a height) and the like of the respective shapes are as described in Fig. 4. The number of units of each liquid recovery section is one or two. Further, 30 µl of formulation mainly made of DPM was dripped to these liquid recovery sections from above the surface 30 for 10 minutes for every one minute, and liquid absorption property of the formulation into the liquid recovery sections was visually observed. In this case, the electrostatic spray device body was tilted toward either a left side or a right side at 7.5 degrees.

The results of recovering a liquid under such test conditions were evaluated in three grades, that is, "O", "Δ" and "×", and the evaluations were shown in Fig. 4. With respect to such evaluations, "○" indicates that the recovery result is favorable, "Δ" indicates that the recovery result is intermediate, and "×" indicates that the recovery result is bad.

To confirm the results of the evaluation in the order of shapes described in Fig. 3 from the top, the liquid recovery section having an inverse trapezoidal shape exhibited the highest liquid absorption property, so that the determination "○" was given to the result of recovering a liquid using the liquid recovery section having an inverse trapezoidal shape. In the liquid recovery section having a circular shape (small), air bubbles remained and hence, the liquid recovery section having a circular shape (small) exhibited less liquid absorption property compared to the liquid recovery section having an inverse trapezoidal shape. In the liquid recovery section having a triangular shape (small) and the liquid recovery section having a circular shape (large), air bubbles remained, so that it was hard to say that these liquid recovery sections exhibited favorable liquid absorption property. With respect to a liquid recovery section having a triangular shape (intermediate), there might be a case where air bubbles were generated, so that it was hard to say that the liquid recovery section having a triangular shape (intermediate) exhibited favorable liquid absorption property. With respect to the liquid recovery section having a triangular shape (large), a part of a liquid remained in a vertex portion and the remaining liquid inhibited the intrusion of a liquid whereby there might be a case where liquid leakage occurred. Accordingly, it was hard to say that the liquid recovery section having a triangular shape (large) exhibited favorable liquid absorption property.

The results of the comparison tests have been described heretofore by reference to Fig. 3 and Fig. 4. As can be understood from the results of the comparison tests, the liquid recovery section 9a is formed in the groove 8a, and has an inverse trapezoidal shape. By forming the liquid recovery section 9a in this manner, a liquid which flowed into the groove 8a can be smoothly recovered into to the inside of the electrostatic spray device 100 through the liquid recovery section 9a. Further, even when a liquid leaks out from the liquid recovery section 9a, it is possible to guide and disperse the liquid to the inside of the groove 8a. The leaked-out liquid can be recovered to the inside of the electrostatic spray device 100 through the liquid recovery section 9b and/or the liquid recovery section 9c. In this case, by forming the liquid recovery section 9b and the liquid recovery section 9c into an inverse trapezoidal shape, it is possible to further smoothly recover the leaked-out liquid to the inside of the electrostatic spray device 100.

Sizes of the liquid recovery section 9a, the liquid recovery section 9b and the liquid recovery section 9c are not particularly limited. However, when the sizes are excessively large, these sizes influence the degree of freedom in designing the electrostatic spray device 100. Accordingly, when a height of the groove 9a is set to approximately 1 mm, it is preferable to set heights of the liquid recovery section 9a, the liquid recovery section 9b and the liquid recovery section 9c to approximately 1.5 mm to 2.0 mm. By setting the heights as described above, a liquid can be smoothly recovered to the inside of the electrostatic spray device 100, and it is also possible to maintain the degree of freedom in designing the electrostatic spray device 100.

### [Slit formed in liquid recovery section 9]

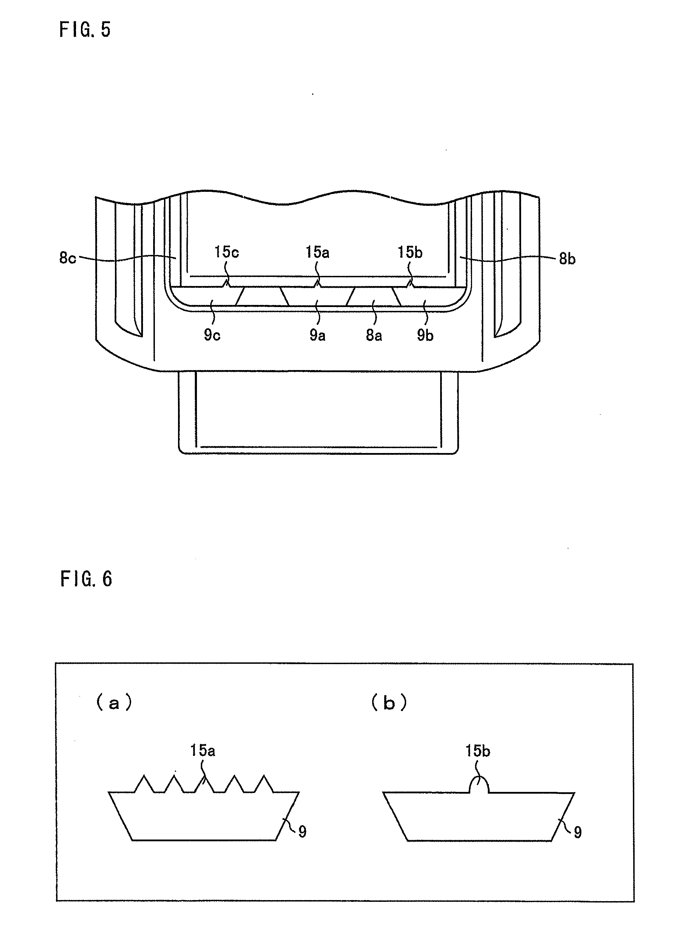

The description has been made heretofore with respect to the case where the liquid absorption property of the liquid recovery section 9 can be increased by the liquid recovery section 9 having an inverse trapezoidal shape. Next, the constitution which further increases liquid absorption property of the liquid recovery section 9 having an inverse trapezoidal shape is described by reference to Fig. 5 and the like.

Fig. 5 is a view showing a lower portion of the electrostatic spray device 100 in an upright posture where slits are formed in a liquid recovery section 9.

As described in the drawing, slits 15a, 15b, 15c are formed in upper parallel sides of the liquid recovery sections 9a, 9b, 9c, respectively (hereinafter, simply referred to as "slit 15" when the slits 15a, 15b, 15c are not distinguished from each other). To be more specific, in the case shown in Fig. 5, minute notches (gaps) are formed in upper parallel sides of the liquid recovery section 9 having an inverse trapezoidal. In this embodiment, such a notch (gap) is referred to as "slit". In the case shown in Fig. 5, the slit 15 has a triangular shape, and a length of one side of the slit 15 is sufficiently short and minute compared to a length of the upper parallel side of the liquid recovery section 9. In the case shown Fig. 5, the slit 15 is formed such that one corner portion of the triangular shape may be directed in the upward direction.

The slits 15 may be formed at any position on the upper parallel side of the liquid recovery section 9. In the case shown in Fig. 5, one slit 15 is formed in the respective liquid recovery sections 9a, 9b, 9c. However, a plurality of slits 15 may be formed in the respective liquid recovery sections 9a, 9b, 9c.

A shape of the slit 15 is not limited to a triangular shape, and the slit 15 may have various shapes. The variation of the slit 15 in shape is described by reference to Fig. 6 (a) and Fig. 6(b). Fig. 6 (a) and Fig. 6 (b) are views for describing a shape of the slit 15, wherein Fig. 6(a) is a view for describing a plurality of slits 15a having a triangular shape, and Fig. 6 (b) is a view for describing a slit 15b having an elliptical shape.

In Fig. 6(a), the plurality of slits 15a are formed in the liquid recovery section 9. The slits 15a are away from each other at irregular intervals. The slits 15a differ from each other in an angle which a side of each slit 15a makes with an upper parallel side of a liquid recovery section 9 and a height of each slit 15a. In Fig. 6(b), the slit 15b is formed in the liquid recovery section 9. The slit 15b has an elliptical shape, and a tip portion of the slit has a curved surface. Both the slit 15a shown in Fig. 6 (a) and the slit 15b shown in Fig. 6(b) have a size sufficiently small compared to a length of the upper parallel side of the liquid recovery section 9.

In this manner, a shape of the slit 15 is not limited to a triangular shape, and the slit 15 may have various shapes. A shape, a size and a position of the slit 15 may differ for the respective units of the liquid recovery section 9. Further, the slit 15 may be formed in some units of the liquid recovery section 9 and may not be formed in some other units of the liquid recovery section 9.

Advantageous effects provided by forming the slit 15 in the liquid recovery section 9 are as follows. When the slit 15 is not formed in the liquid recovery section 9, a liquid which is dripped from the surface 30 flows along the upper parallel side, so that there may be a case where the liquid is not smoothly recovered to the inside of the liquid recovery section 9 or it takes time to recover the liquid to the inside of the liquid recovery section 9. To the contrary, it is found that, by forming the minute slit 15 which constitutes a notch (gap) on the upper parallel side of the liquid recovery section 9, a liquid which is dripped from the surface 30 easily flows into the slit 15. That is, by forming the slit 15 in the upper parallel side of the liquid recovery section 9, it is possible to further increase a possibility that a liquid dripped from the surface 30 is recovered to the inside of the liquid recovery section 9.

### [Modification]

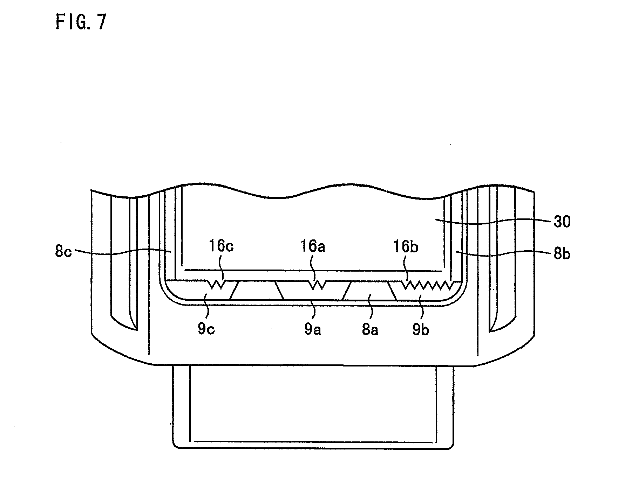

Next, a modification which brings about advantageous effects substantially equal to the advantageous effects brought about by the slit 15 shown in Fig. 5 is described by reference to Fig. 7. Fig. 7 is a view showing the modification shown in Fig. 5.

As described in the drawing, in an electrostatic spray device shown in Fig. 7, portions of a surface 30 of the device project from an upper parallel side of a liquid recovery section 9 in the downward direction. To be more specific, in the liquid recovery section 9a, minute portions of the surface 30 each having a triangular shape (projecting portions 16a in the drawing) project in the downward direction from a portion in the vicinity of a center portion of the upper parallel side. In the liquid recovery section 9b, minute portions of the surface 30 each having a triangular shape (projecting portions 16b in the drawing) project in the downward direction from an upper parallel side over the whole upper parallel side. In the liquid recovery section 9c, minute portions of the surface 30 each having a triangular shape (projecting portions 16c in the drawing) project in the downward direction from a portion of the upper parallel side in the right side (liquid recovery section 9a side).

That is, in the electrostatic spray device shown in Fig. 7, by forming the projecting portions 16a to 16c in the surface 30, slits are formed in the upper parallel sides of the liquid recovery section 9. Due to such a constitution, also in the liquid recovery section 9 shown in Fig. 7, a liquid which is dripped from the surface 30 can be recovered to the inside of the liquid recovery section 9 and hence, it is possible to further increase liquid absorption property.

Although the projecting portions 16a to 16c shown in Fig. 7 have a triangular shape, the projecting portions 16a to 16c may have other shapes. Further, sizes, positions and the number of projecting portions are not limited and may be suitably determined.

### (Notes)

The electrostatic spray device according to one mode of this embodiment may be configured such that plural units of substance recovery section may be formed in the groove.

By forming the plural units of substance recovery section in the groove, it is possible to increase a recovery ratio (amount) of substance collected in the groove.

The electrostatic spray device according to one mode of this embodiment may be configured such that the groove may extend substantially perpendicular to the direction of gravity when the device is made to stand, and there may be provided three units of the substance recovery section, one located in the center of the extending groove and the other two in each end of the extending groove respectively.

The electrostatic spray device has three units of the substance recovery section, one located in the center of the extending groove and two in each end of the extending groove respectively. Due to such a constitution, the substance recovery section can favorably recover a substance which moves in the direction where the electrostatic spray device according to the present invention is tilted.

The electrostatic spray device according to one mode of this embodiment may be configured such that a storage container for storing the substance may be disposed in the inside of the device, and the substance recovery section may be communicably connected to the storage container.

According to the above-mentioned constitution, the substance recovered by the substance recovery section can be stored in the storage container. Due to such a constitution, a substance adhered to the surface of the device due to a spray back or the like can be used again and hence, it is possible to accelerate the effective utilization of the substance.

The electrostatic spray device according to one mode of this embodiment may be configured such that the groove is formed such that the groove may surround the first electrode and the second electrode.

A substance adhered to the surface of the device due to a spray back or the like is a substance sprayed from the first electrode. Accordingly, there are many cases in which a substance adheres to a surface of the device around the first electrode and the second electrode.

In view of the above, by forming the groove such that the groove may surround the first electrode and the second electrode, a larger amount of substance adhered to the surface of the device can be recovered.

The electrostatic spray device according to one mode of this embodiment may be configured such that a slit 15 is formed on the longer of the parallel sides of the trapezoid in the substance recovery section 9.

By forming the slit in the longer of the parallel sides of the trapezoid, the substance recovery section 9 can further recover a substance in the electrostatic spray device according to one mode of this embodiment.

Various modes of the electrostatic spray device according to the embodiment have been described heretofore. However, these modes merely constitute one example of the embodiment so that it is a matter of course that the modes described in the embodiment can be combined with each other.

The present invention is not limited to the above-mentioned embodiment, and various modifications are conceivable with respect to the embodiment within the scope of inventions called for in claims. That is, embodiments which are obtained by combining technical units suitably modified within the scope of invention called for in claims also fall within the technical scope of the present invention.

### INDUSTRIAL APPLICABILITY

The present invention is suitably applicable to electrostatic spray devices which spray a substance to be sprayed such as essential oils, chemical substances for agricultural products, pharmaceuticals, agricultural chemicals, insecticides or air purifying agents.

### DESCRIPTION OF REFERENCE SIGNS

- 1: Spray electrode (First electrode)
- 2: Reference electrode (Second electrode)
- 3: Power source device
- 6: Spray electrode mounting portion
- 7: Reference electrode mounting portion
- 9: Liquid recovery section (Substance recovery section)
- 10: Dielectric
- 15: Slit
- 16: Projecting portion
- 20: Storage container
- 21, 22: Electric conductor
- 30: Surface
- 31, 32: Opening
- 100: Electrostatic spray device

## Claims

1. An electrostatic spray device equipped with a first electrode for spraying a substance from the tip thereof and a second electrode across which and the first electrode voltage is applied,
comprising a groove formed on a surface of the device for collecting the substance adhered to the surface, and a substance recovery section formed in the groove for recovering the collected substance into the device from the groove, wherein the substance recovery section is provided in the form of a trapezoidal opening, and when the device is made to stand, the shorter of the parallel sides of the trapezoid is located below in the direction of gravity.

2. The electrostatic spray device according to claim 1, wherein plural units of the substance recovery section are formed in the groove.

3. The electrostatic spray device according to claim 2, wherein the groove extends substantially perpendicularly to the direction of gravity when the device is made to stand, and there are provided three units of the substance recovery section, one located in the center of the extending groove and the other two in each end of the groove respectively.

4. The electrostatic spray device according to any one of claims 1 to 3, wherein a storage container for storing the substance is disposed in the inside of the device, and
the substance recovery section is communicably connected to the storage container.

5. The electrostatic spray device according to any one of claims 1 to 4, wherein the groove is formed in a state where the groove surrounds the first electrode and the second electrode.

6. The electrostatic spray device according to any one of claims 1 to 5, wherein a slit is formed in the longer of the parallel sides of the trapezoid.
